# FASCICULE DE BREVET EUROPEEN

(11) **EP 1 595 591 B1**
(45) Date de publication et mention de la délivrance du brevet: **01.08.2007**
(21) Numéro de dépôt: 05300330.7
(22) Date de dépôt: 27.04.2005
(51) Int. Cl.: B01D 53/50, C12G 1/04

(54) **Dispositif pour éviter le rejet dans l'atmosphère d'anhydride sulfureux sous forme gazeuse**
Vorrichtung zur Vermeidung von Schwefeldioxidemissionen zur Erdatmosphäre
Apparatus for avoiding sulphur dioxide emissions to ambient air

(30) Priorité: 27.04.2004 FR 0450802
(43) Date de publication de la demande: 16.11.2005
(73) Titulaire: RC PUIG SL, 17600 FIGUERES (ES)
(72) Inventeur: Puig, René, 66300, Trouillas (FR); Puig, Christelle, 66300, Trouillas (FR)
(74) Mandataire: Rhein, Alain

(56) Documents cités:
- EP-A- 0 496 295
- EP-A- 0 745 421
- DE-A- 3 320 743
- FR-A- 1 042 588
- FR-A- 2 380 810
- FR-E- 57 144
- US-A- 4 268 489

## Description

La présente invention se rapporte à un dispositif pour éviter le rejet dans l'atmosphère d'anhydride sulfureux sous forme gazeuse libéré lors de la réalisation d'un traitement à base d'anhydride sulfureux sous forme liquide.

Un tel traitement peut, par exemple et non limitativement, consister en un sulfitage d'un liquide tel que du vin, dans ce cas le dispositif selon l'invention est utilisé lors de la préparation au moyen d'un sulfidoseur, de la dose d'anhydride sulfureux à intégrer au vin.

On notera qu'il sera essentiellement fait référence dans la description au sulfitage du vin sachant toutefois que le traitement peut s'appliquer à d'autres liquides ou boissons.

Ce traitement chimique à visée biocide et anti-oxydante consiste à soumettre un moût à l'action de l'anhydride sulfureux. De manière générale, le sulfitage fait appel à un gaz liquéfié, à des solutions aqueuses, ou encore à des bisulfites libérant progressivement de l'anhydride sulfureux. Ainsi le sulfitage peut par exemple être réalisé par introduction, dans la cuve contenant le moût, de pastilles solides ou de poudres de bisulfite ou d'une solution aqueuse convenablement dosée en anhydride sulfureux.

Bien que l'on trouve actuellement dans le commerce de telles solutions aqueuses, poudres et pastilles solides pré dosées, de nombreux professionnels préfèrent opter pour le sulfitage de moût au moyen de gaz d'anhydride sulfureux sous forme liquide avec ou sans utilisation d'un sulfidoseur, en fonction de l'état desdits moûts, pour des raisons d'efficacité, de coût et de rapidité d'intervention.

Il est également possible d'utiliser un procédé de sulfitage automatique branché sur la pompe à vendange, qui se présente sous forme d'un bac de stockage accouplé à une bouteille d'anhydride sulfureux sous forme de gaz liquéfié, à une arrivée d'eau permettant de fabriquer une solution aqueuse d'anhydride sulfureux diluée et d'une pompe doseuse qui injecte la solution dans le moût en quantité voulue.

Le sulfitage correspond à une phase essentielle de la production de vins et autres boissons; cependant les émanations de gaz d'anhydride sulfureux lors du remplissage du sulfidoseur on de préparation de solutions à base de soufre rendent ce traitement dangereux pour les personnes attachées à cette application et autre travaillant dans l'environnement.

En fait, le sulfidoseur est destiné à mesurer une dose d'anhydride sulfureux sous forme liquide en vue de l'incorporation de cette dose dans le liquide à traiter. Le sulfidoseur étant un récipient fermé, il est nécessaire de procéder à son dégazage pour le remplir, et c'est lors de cette opération qu'il y a rejet de gaz d'anhydride sulfureux dans l'atmosphère.

Ainsi, les émanations de ce gaz qui s'échappent dans l'atmosphère pendant la durée du traitement peuvent générer de graves problèmes de santé, notamment irritations des yeux, des muqueuses, de sérieux troubles du système respiratoire et de dégradation des cellules du foie.

Par conséquent, afin d'améliorer les conditions de travail des opérateurs et de l'environnement au cours de ces phases de traitement, il est indispensable de pouvoir disposer de moyens permettant d'éviter des rejets d'anhydride sous forme gazeuse, notamment en le neutralisant au fur et à mesure de sa formation. A ce propos, l'on connaît à l'heure actuelle plusieurs procédés permettant d'éliminer des oxydes de soufre contenus dans certains produits liquides ou gazeux.

Ainsi le document EP 0 205 976 concerne un procédé chimique, particulièrement adapté à la purification de résidus gazeux contenant du dioxyde de souffre et à la neutralisation d'acide sulfurique, qui consiste à traiter les matières concernées à l'aide d'oxyde de baryum, puis de dissocier thermiquement, avec addition de soufre , les sulfates et sulfites de b obtenus, en oxyde de soufre et en oxyde de baryum qui peuvent réintroduits dans le procédé initial.

Le document FR 2 566 761 concerne un procédé d'élimination et de récupération du soufre sous forme élémentaire à partir de gaz contenant notamment du dioxyde de soufre. Ce procédé se caractérise en ce que le dioxyde de soufre contenu dans les gaz est absorbé dans une solution de lavage portant du sulfure de telle sorte que le pH de la solution de lavage est dans la gamme de 2,5 à 5 ou le potentiel d'oxydo-réduction est dans la gamme de 70 à 260 mV par rapport à une électrode au calomel. La solution d'épuration résultante est dirigée dans un autoclave dans lequel les composés contenus dans la solution sont encore traités à une température élevée .

Un autre procédé destiné à des fins analogues est encore connu notamment du document US 4 078 048 qui prévoit, pour éliminer du dioxyde de soufre contenu dans un gaz, de laver ce dernier avec un métal alcalin dans une solution aqueuse et de traiter les composés obtenus avec du sulfure de baryum.

Ces différents documents correspondent à des solutions complexes et parfois dangereuses, adaptées à certaines situations industrielles et nécessitant pour leur mise en oeuvre une certaine qualification de la part des opérateurs. Ils ne proposent pas de solutions adaptées à une utilisation pour éviter le rejet d'émanations de gaz d'anhydride sulfureux dans l'atmosphère lors des opérations de sulfitage précédemment évoquées, et pouvant être effectuées par des personnes sans compétence particulière .

On connaît également par le document FR 1.042.588 un procédé de désulfitation des jus ou liquides sulfites permettant d'éliminer le gaz sulfureux sans qu'il soit nécessaire de soumettre les produits traités à l'action de la chaleur ou du vide. Ce document concerne la régénération d'un gaz désulfiteur, par l'élimination de celui-ci du dioxyde de soufre dont il s'est chargé lors d'une opération de désulfitation, par contre il ne concerne pas le traitement des gaz issus du dégazage d'un sulfidoseur, en vue d'éviter des rejets de gaz d'anhydride sulfureux dans l'atmosphère.

Les documents FR 2 380 810 et FR 57 144 concernent un procédé pour l'élimination de l'anhydride sulfureux contenu dans l'air d'échappement provenant d'un procédé de désulfitation ou stérilisation par barbotage dans une solution neutralisante.

La présente invention se propose d'apporter une solution spécifiquement adaptée à cet effet grâce à un dispositif efficace, fiable, simple à utiliser et peu onéreux.

L'invention a donc pour objet un le dispositif pour éviter le rejet dans l'atmosphère d'anhydride sulfureux sous forme gazeuse libéré lors de la réalisation d'un traitement à base d'anhydride sulfureux sous forme liquide pour le sulfitage d'un liquide tel que du vin en utilisant un sulfidoseur, ce dispositif comprenant un récipient destiné à être rempli environ aux deux tiers d'une solution de neutralisation par barbotage d'anhydride sulfureux sous forme gazeuse et des moyens de transfert de ce gaz vers ladite solution neutralisante, ce dispositif se caractérise essentiellement en ce qu'il comprend plusieurs récipients destinés à accueillir ladite solution neutralisante, réunis entre eux par le biais de moyens permettant d'acheminer le gaz, successivement de l'un des récipients vers le suivant, sans possibilité de retour, de sorte à lui faire traverser à plusieurs reprises ladite solution neutralisante, afin d'augmenter le rendement de neutralisation ; et en ce que lesdits moyens d'acheminement sont équipés d'au moins un clapet anti-retour apte à permettre d'éviter le siphonnage du contenu d'un récipient vers le récipient précédent, ainsi qu'à freiner le passage des gaz afin d'optimiser l'action de ladite solution neutralisante.

Ainsi lorsqu'un tel dispositif est accouplé à un sulfidoseur, les rejets de gaz issus du dégazage de celui-ci lors son remplissage d'anhydride sulfureux sous forme liquide, ne sont pas libérés dans l'atmosphère mais immédiatement récupérés et entièrement neutralisés.

Selon une caractéristique additionnelle du dispositif selon l'invention, le, ou les, clapet anti-retour est du type apte à ne s'ouvrir qu'à partir d'une certaine pression, en sorte de constituer un frein au passage du gaz, et ainsi autoriser une action optimale de la solution neutralisante sur ce dernier.

Selon une autre caractéristique avantageuse les récipients sont équipés d'au moins un hublot de contrôle permettant de visualiser le niveau et l'aspect de la solution neutralisante.

Cette particularité permet avantageusement et rapidement de contrôler le degré de saturation de la solution en temps réel, afin de pouvoir, si nécessaire la régénérer ou la renouveler immédiatement pour en assurer l'efficacité optimale du procédé.

L'invention et ses autres caractéristiques seront mieux comprises à la lecture de la description qui va suivre, et qui se rapporte à un exemple de réalisation donné à titre indicatif et non limitatif.

La compréhension de cette description sera facilitée au vu de la figure jointe en annexe, qui correspond à un schéma d'un mode de réalisation d'un dispositif selon l'invention accouplée à un sulfidoseur.

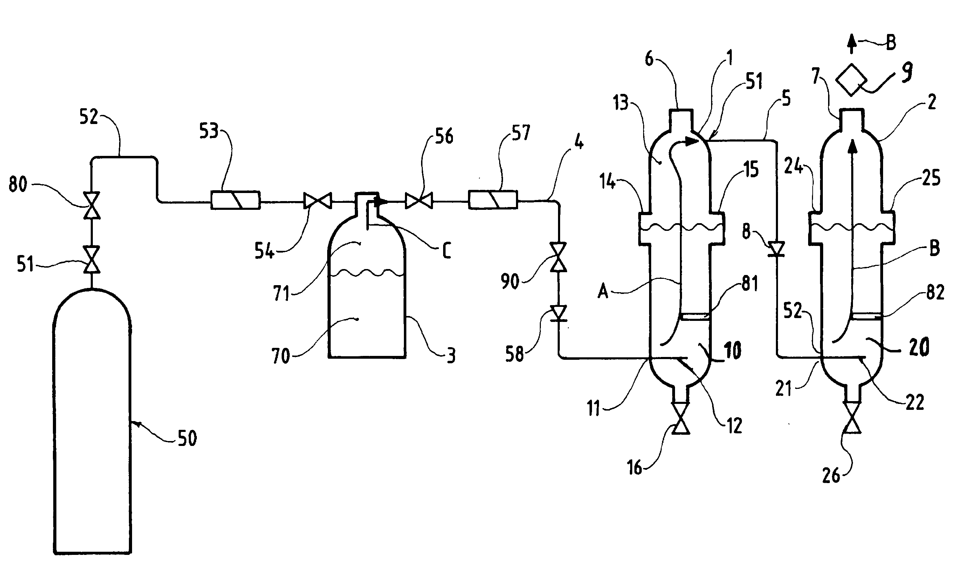

En référence à cette figure 1, on peut voir que ce dispositif comprend deux récipients 1 et 2 destinés à être remplis environ aux deux tiers d'une solution neutralisante, respectivement 10 et 20, composée d'un mélange, de concentration appropriée, de soude caustique ou de potasse caustique dans de l'eau, apte à neutraliser par barbotage l'anhydride sulfureux sous forme gazeuse 71, rejeté par un sulfidoseur 3 lors du remplissage par celui-ci au moyen d'anhydride sulfureux sous forme liquide 70.

Les récipients 1 et 2 présentent chacun à leur extrémité supérieure un bouchon de remplissage, respectivement 6 et 7, permettant d'introduire les solutions 10 et 20 ou, le cas échéant, d'en évacuer les gaz neutralisés après leur traitement.

Le sulfidoseur 3 est alimenté en anhydride sulfureux sous forme liquide 70 par une bouteille 50, et il est acheminé à travers son robinet 51, une tubulure 52, un coupleur antipollution à face plane 53, permettant de ne pas libérer de fluide 70 ou gaz 71 à chaque connexion ou déconnexion du sulfidoseur 3.

Le gaz 71 devant être dégagé du sulfidoseur 3 pour permettre le remplissage de celui-ci en liquide 70, s'achemine, dans le sens de la flèche C, vers le récipient 1 au travers d'une tubulure 4 équipée d'une vanne 56 et d'un coupleur 57 ayant la même fonction que le coupleur 53 pour permettre à l'opérateur de désaccoupler le sulfidoseur 3 et d'aller le vider dans la ou les cuves à traiter. La tubulure 4 est également munie, en aval du coupleur 57 à proximité du récipient 1, d'un clapet anti-retour 58.

Le gaz est ainsi traité une première fois par la solution 10 contenue dans le récipient 1 dans lequel il pénètre au niveau d'une bouche d'introduction 11 située à proximité de l'extrémité inférieure du récipient 1.

Le gaz dégagé du sulfidoseur 3 traverse par barbotage la solution neutralisante 10 du bas vers le haut du récipient 1, dans le sens indiqué par la flèche A, avant d'être capté par l'embouchure d'une tubulure 5 dont une extrémité 51 communique au niveau supérieur du récipient 1 avec le volume de gaz partiellement neutralisé 13 situé au-dessus de la solution 10, tandis que l'autre extrémité 52 débouche dans le récipient 2, à la base de celui-ci, par une bouche d'introduction 21.

Ainsi le gaz est amené à traverser la solution neutralisante 20 contenue dans le récipient 2 dans le sens indiqué par la flèche B pour subir un second traitement, identique au premier et permettant d'en améliorer le procédé de barbotage et son rendement.

Selon une caractéristique particulièrement avantageuse de l'invention, la tubulure 5 est équipée d'un clapet anti-retour 8 qui permet d'éviter le siphonnage par phénomène de pression du récipient 2 vers le 1.

Ce clapet anti-retour 8 permet également de mieux contrôler la neutralisation du gaz partiellement neutralisé 13 dans le récipient 1. En effet, le clapet anti-retour 8 est de préférence du type apte à ne s'ouvrir qu'au-delà d'une certaine pression, en sorte de constituer un frein au passage du gaz, et ainsi autoriser une action optimale de la solution neutralisante 10 sur ce dernier.

D'autre part, de manière à permettre une parfaite diffusion du gaz à neutraliser dans les solutions 10 et 20, et d'en assurer l'efficacité du barbotage les bouches d'introduction 11 et 21 sont prolongées au moyen de diffuseurs 12 et 22 baignant respectivement dans lesdites solutions 10 et 20.

Selon une autre particularité de l'invention, chaque récipient 1 et 2 est équipé de hublots 14, 15, 24 et 25 permettant à la fois de vérifier le niveau des solutions neutralisantes 10 et 20, et de visualiser en temps réel leur degré de saturation grâce à la présence d'un indicateur coloré, tel que le bleu de bromothymol, qui provoque un changement de couleur en fonction de l'évolution de son pH.

Ainsi, lorsque la solution neutralisante est versée dans les récipients 1 et 2 avec son indicateur coloré, sa couleur est bleue du fait que le pH de la solution dite neuve est supérieur à 7, la couleur verte apparaîtra quand la solution aura un pH équivalent à 7, soit moyennement saturée, puis virera au jaune quand la solution sera entièrement saturée. Dans ce cas il sera nécessaire de remplacer la solution, et à cet effet chacun des récipients 1 et 2 comporte une vanne, respectivement 16 et 26, permettant de procéder à la vidange.

Dans cette même optique, les récipients 1 et 2 peuvent également être équipés de capteurs de pH 81 et 82, aptes à signaler l'éventuelle saturation des solutions 10 et 20.

D'autre part, le dispositif peut également être associé à des capteurs de gaz 9, aptes à déceler une éventuelle fuite d'anhydride sulfureux pendant les opérations de traitement, ces capteurs pouvant être disposés par exemple en sortie du récipient 2.

Ces capteurs de gaz, de même que les capteurs de pH 81 et 82, peuvent coopérer avec des vannes électromagnétiques 80 et 90 aptes à provoquer l'ouverture ou la fermeture des tubulures afin de bloquer le processus de remplissage du sulfidoseur 3 lorsque la saturation de l'une ou l'autre des solutions 10 et 20 est signalée et/ou quand une fuite est décelée.

Afin de résister parfaitement à la composition des solutions et du gaz à neutraliser, les récipients 1 et 2 et les autres moyens constitutifs du dispositif seront de préférence réalisés au moyen de matériaux tels que l'inox, le verre, le viton, l'EPDM (éthylène propylène diène monomère), le téflon ou autres compatibles.

Tel qu'il ressort clairement de ce qui précède, le présent dispositif permet d'éviter, grâce à la mise en oeuvre de moyens simples et peu onéreux, de tout rejet de gaz et émanations d'anhydride sulfureux non utilisé pendant la phase du sulfitage de moût et autres liquides à traiter ainsi qu'une rapidité d'intervention, et par conséquent de permettre une amélioration des conditions de travail pour les ouvriers et opérateurs sur les sites d'exploitation.

## Revendications

1. Dispositif pour éviter le rejet dans l'atmosphère d'anhydride sulfureux sous forme gazeuse libéré lors de la réalisation d'un traitement à base d'anhydride sulfureux sous forme liquide pour le sulfitage d'un liquide tel que du vin en utilisant un sulfidoseur (3), ledit dispositif comprenant un récipient (1, 2) destiné à être rempli environ aux deux tiers d'une solution (10, 20) de neutralisation par barbotage d'anhydride sulfureux sous forme gazeuse et des moyens de transfert (4) de ce gaz vers ladite solution neutralisante, dispositif **caractérisé en ce qu'**il comprend plusieurs récipients (1, 2) destinés à accueillir ladite solution neutralisante (10, 20), réunis entre eux par le biais de moyens (4, 5) permettant d'acheminer le gaz, successivement de l'un des récipients (1) vers le suivant (2), sans possibilité de retour, de sorte à lui faire traverser à plusieurs reprises ladite solution neutralisante (10, 20), afin d'augmenter le rendement de neutralisation ; et **en ce que** lesdits moyens d'acheminement (4, 5) sont équipés d'au moins un clapet anti-retour (8) apte à permettre d'éviter le siphonnage du contenu d'un récipient (2) vers le récipient précédent (1), ainsi qu'à freiner le passage des gaz afin d'optimiser l'action de ladite solution neutralisante (10).

2. Dispositif selon la revendication 1, **caractérisé en ce que** le, ou les, clapet anti-retour (8) est du type apte à ne s'ouvrir qu'à partir d'une certaine pression, en sorte de constituer un frein au passage du gaz, et ainsi autoriser une action optimale de la solution neutralisante sur ce dernier.

3. Dispositif selon la revendication 1 ou la revendication 2, **caractérisé en ce que** les récipients (1, 2) sont équipés d'au moins un hublot (14, 15, 24, 25) permettant de surveiller le niveau et l'aspect de la solution neutralisante (10, 20).

4. Dispositif selon l'une quelconque des revendications précédentes, **caractérisé en ce que** lesdits récipients (1, 2) présentent, au niveau de leur extrémité supérieure, un bouchon (6, 7) de remplissage et/ou d'évacuation permettant d'y introduire la solution neutralisante (10, 20) ou, le cas échéant, d'en évacuer les gaz neutralisés après leur traitement, et au niveau de l'extrémité inférieure une bouche (11, 21) d'introduction d'anhydride sulfureux sous forme gazeuse ainsi qu'une vanne de vidange (16, 26).

5. Dispositif selon la revendication 4, **caractérisé en ce que** la bouche d'introduction (11, 21) est prolongée d'un moyen diffuseur (12, 22) apte à améliorer la diffusion dans la solution neutralisante (10, 20).

6. Dispositif selon l'une quelconque des revendications précédentes, **caractérisé en ce que** les moyens de transfert de l'anhydride sulfureux liquide au sulfidoseur (3) sont définis par une tubulure (52) équipée d'un coupleur antipollution (53), tandis que le transfert du gaz rejeté du sulfidoseur est réalisé par le biais d'une autre tubulure (4), également équipée d'un coupleur antipollution (57), qui permet l'acheminement du gaz à neutraliser vers la partie inférieure du premier récipient (1), tandis que la jonction avec le récipient suivant (2) est réalisée au travers d'une tubulure (5) faisant la jonction entre la partie supérieure du premier (1) et la partie inférieure du second (2).

7. Dispositif selon l'une quelconque des revendications précédentes, **caractérisé en ce qu'**il comprend des capteurs de gaz aptes à déceler une éventuelle fuite d'anhydride sulfureux sous forme gazeuse.

8. Dispositif selon l'une quelconque des revendications précédentes, **caractérisé en ce que** les récipients (1, 2) sont équipés de capteurs de pH afin de signaler la saturation du liquide neutralisant (10, 20).

9. Dispositif selon la revendication 7, **caractérisé en ce qu'**il comprend des vannes électromagnétiques (80, 90) associées aux capteurs des gaz, et aptes à provoquer l'ouverture ou la fermeture des moyens d'acheminement (52, 4).

10. Dispositif selon la revendication 8, **caractérisé en ce qu'**il comprend des vannes électromagnétiques (80, 90) associées aux capteurs de pH, et aptes à provoquer l'ouverture ou la fermeture des moyens d'acheminement (52, 4).

## Claims

1. Apparatus for avoiding emissions to the ambient air of gaseous sulphur dioxide released during the performing of a treatment with liquid sulphur dioxide for sulphiting a liquid, such as wine, by using a sulfitometer (3), said apparatus comprising a receptacle (1, 2) aimed at being filled to about two thirds with a solution (10, 20) for neutralising through bubbling of gaseous sulphur dioxide, and means for transferring (4) this gas to the neutralising solution, which apparatus is **characterised in that** it includes several receptacles (1, 2) aimed at receiving said neutralising solution (10, 20), united to each other through means (4, 5) allowing to convey the gas successively from one of the receptacles (1) to the next one (2) without any possibility of return, so as to cause it to pass several times through said neutralising solution (10, 20), in order to increase the neutralising effect, and **in that** said conveying means (4, 5) are provided with at least one non-return valve (8) capable of allowing to avoid the siphoning of the contents of a receptacle (2) towards the preceding receptacle (1), as well as to brake the passing through of the gases, in order to optimise the action of said neutralising solution (10).

2. Apparatus according to claim 1, **characterised in that** the non-return valve or the non-return valves (8) are of the type capable of opening only from a determined pressure, so as to constitute a brake for the passing through of the gas and to thus authorise an optimal action of the neutralising solution on the latter.

3. Apparatus according to claim 1 or claim 2, **characterised in that** the receptacles (1, 2) are provided with at least one viewing window (14, 15, 24, 25) allowing to monitor the level and the aspect of the neutralising solution (10, 20).

4. Apparatus according to any of the preceding claims, **characterised in that** said receptacles (1, 2) have, at the level of their upper end, a filling and/or draining stop (6, 7) allowing to introduce through it the neutralising solution (10, 20) or eventually to evacuate the neutralised gases after their treatment, and at the level of the lower end an inlet opening (11, 21) for gaseous sulphur dioxide as well as a drain valve (16, 26).

5. Apparatus according to claim 4, **characterised in that** the inlet opening (11, 21) is extended by a diffuser (12, 22) capable of improving the diffusion in the neutralising solution (10, 20).

6. Apparatus according to any of the preceding claims, **characterised in that** the means for transferring the liquid sulphur dioxide to the sulfitometer (3) are defined by a pipe (52) provided with an anti-pollution coupler (53), while the transfer of the gas emitted from the sulfitometer occurs through another pipe (4), which is also provided with an anti-pollution coupler (57), which allows to convey the gas to be neutralised to the lower portion of the first receptacle (1), while the connection with the next receptacle (2) occurs through a pipe (5), which ensures the connection between the upper portion of the first receptacle (1) and the lower portion of the second receptacle (2).

7. Apparatus according to any of the preceding claims, **characterised in that** it comprises gas sensors capable of detecting an eventual leakage of gaseous sulphur dioxide.

8. Apparatus according to any of the preceding claims, **characterised in that** the receptacles (1, 2) are provided with pH-sensors, in order to warn about the saturation of the neutralising liquid (10, 20).

9. Apparatus according to claim 7, **characterised in that** it comprises solenoid valves (80, 90) associated with the gas sensors und capable of causing the conveying means (52, 4) to open or to close.

10. Apparatus according to claim 8, **characterised in that** it comprises solenoid valves (80, 90) associated with the pH sensors and capable of causing the conveying means (52, 4) to open or to close.

## Patentansprüche

1. Vorrichtung, um die Emissionen von Schwefeldioxyd in gasförmigem Zustand in die Atmosphäre zu vermeiden, das bei der Durchführung einer Behandlung mit Schwefeldioxyd in flüssiger Form für das Schwefeln einer Flüssigkeit wie Wein freigesetzt wurde, indem ein Sulfitometer (3) benutzt wird, wobei die besagte Vorrichtung ein Gefäß (1, 2), vorgesehen, um auf ungefähr zwei Drittel mit einer Lösung (10, 20) zur Neutralisierung durch Gasspülung von Schwefeldioxyd in gasförmigem Zustand gefüllt zu werden, und Mittel zur Übertragung (4) dieses Gases zu der besagten neutralisierenden Lösung umfasst, wobei die Vorrichtung **dadurch gekennzeichnet ist, daß** sie mehrere Gefäße (1, 2) umfaßt, vorgesehen, um die besagte neutralisierende Lösung (10, 20) aufzunehmen, die durch Mittel (4, 5) untereinander verbunden sind, erlaubend, das Gas aufeinanderfolgend von dem einen der Gefäße (1) in Richtung des folgenden (2) ohne Rücklaufmöglichkeit weiterzuleiten, derart, um es wiederholt die besagte neutralisierende Lösung (10, 20) durchströmen zu lassen, um den Wirkungsgrad der Neutralisierung zu erhöhen, und daß die besagten Beförderungsmittel (4, 5) mit wenigstens einem Rückschlagventil (8) ausgestattet sind, das geeignet ist, um zu erlauben, das Abziehen des Inhalts eines Gefäßes (2) in Richtung des sich unmittelbar davor befindlichen Gefäßes (1) zu vermeiden sowie den Übergang des Gases zu bremsen, um die Wirkung der besagten neutralisierenden Lösung (10) zu optimieren.

2. Vorrichtung nach Anspruch 1, **dadurch gekennzeichnet, daß** das Rückschlagventil oder die Rückschlagventile (8) von solcher Art ist (sind), geeignet, um sich nur ab einem gewissen Druck zu öffnen, derart, um eine Bremse für den Übergang des Gases zu bilden und so eine optimale Wirkung der neutralisierenden Lösung auf dieses Letztere zu erlauben.

3. Vorrichtung nach Anspruch 1 oder Anspruch 2, **dadurch gekennzeichnet, daß** die Gefäße (1, 2) mit wenigstens einem Sichtfenster (14, 15, 24, 25) ausgestattet sind, erlaubend, das Niveau und das Aussehen der neutralisierenden Lösung (10, 20) zu überwachen.

4. Vorrichtung nach irgendeinem der vorgehenden Ansprüche, **dadurch gekennzeichnet, daß** die besagten Gefäße (1, 2) im Bereich ihres oberen Endes einen Einfüll- und/oder Abfuhrverschluß (6, 7) aufweisen, erlaubend, dort die neutralisierende Lösung (10, 20) einzuleiten oder gegebenenfalls von da die neutralisierten Gase nach ihrer Behandlung abzuführen, und im Bereich des unteren Endes einen Durchlaß (11, 21) zur Einleitung von Schwefeldioxyd in gasförmigem Zustand sowie ein Entleerungsventil (16, 26) aufweisen.

5. Vorrichtung nach Anspruch 4, **dadurch gekennzeichnet, daß** der Durchlaß (11, 21) zum Einleiten durch einen Zerstreuer (12, 22) verlängert ist, geeignet, um die Diffusion in der neutralisierenden Lösung (10, 20) zu verbessern.

6. Vorrichtung nach irgendeinem der vorgehenden Ansprüche, **dadurch gekennzeichnet, daß** die Mittel zur Übertragung des flüssigen Schwefeldioxyds zum Sulfitometer (3) durch eine Leitung (52) gebildet sind, die mit einer pollutionsmindernden Koppelmuffe (53) ausgestattet ist, während die Übertragung des freigesetzten Gases von dem Sulfitometer durch eine andere Leitung (4) erfolgt, die ebenfalls mit einer pollutionsmindernden Koppelmuffe (57) ausgestattet ist, die die Weiterleitung des zu neutralisierenden Gases in Richtung des unteren Teiles des ersten Gefäßes (1) erlaubt, während die Verbindung mit dem folgenden Gefäß (2) durch eine Leitung (5) erfolgt, die die Verbindung zwischen dem oberen Teil des ersten Gefäßes (1) und dem unteren Teil des zweiten Gefäßes (2) herstellt.

7. Vorrichtung nach irgendeinem der vorgehenden Ansprüche, **dadurch gekennzeichnet, daß** sie Gassensoren umfaßt, die geeignet sind, um einen möglichen Austritt von Schwefeldioxyd in gasförmigem Zustand festzustellen.

8. Vorrichtung nach irgendeinem der vorgehenden Ansprüche, **dadurch gekennzeichnet, daß** die Gefäße (1, 2) mit pH-Sensoren ausgestattet sind, um die Sättigung der neutralisierenden Flüssigkeit (10, 20) zu signalisieren.

9. Vorrichtung nach Anspruch 7, **dadurch gekennzeichnet, daß** sie elektromagnetische Ventile (80, 90) umfaßt, die den Gassensoren zugeordnet sind, und die geeignet sind, um die Öffnung oder die Schließung der Beförderungsmittel (52, 4) zu verursachen.

10. Vorrichtung nach Anspruch 8, **dadurch gekennzeichnet, daß** sie elektromagnetische Ventile (80, 90) umfaßt, die den pH-Sensoren zugeordnet sind, und die geeignet sind, um die Öffnung oder die Schließung der Beförderungsmittel (52, 4) zu verursachen.
